(19) **Europäisches Patentamt European Patent Office Office européen des brevets**

(11) **EP 4 465 401 A1**

(12) **EUROPEAN PATENT APPLICATION**
published in accordance with Art. 153(4) EPC

(43) Date of publication:
**20.11.2024 Bulletin 2024/47**

(21) Application number: **23845653.7**

(22) Date of filing: **27.07.2023**

(51) International Patent Classification (IPC):
$H01M\ 10/0525^{(2010.01)}$    $H01M\ 4/13^{(2010.01)}$
$H01M\ 10/0566^{(2010.01)}$    $H01M\ 10/0568^{(2010.01)}$
$H01M\ 10/0569^{(2010.01)}$    $H01M\ 10/058^{(2010.01)}$
$H01M\ 4/58^{(2010.01)}$    $H01M\ 10/42^{(2006.01)}$

(52) Cooperative Patent Classification (CPC):
Y02E 60/10

(86) International application number:
**PCT/CN2023/109600**

(87) International publication number:
**WO 2024/022446 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.07.2022 CN 202210899531**

(71) Applicant: **SVOLT Energy Technology Co., Ltd.**
**Changzhou, Jiangsu 213200 (CN)**

(72) Inventors:
• **ZHANG, Xianhui**
**hangzhou, Jiangsu 213200 (CN)**
• **ZHI, Yanhui**
**hangzhou, Jiangsu 213200 (CN)**

(74) Representative: **Groth & Co. KB**
**P.O. Box 6107**
**102 32 Stockholm (SE)**

(54) **LITHIUM ION BATTERY**

(57) A lithium ion battery, belonging to the technical field of lithium ion battery manufacture. The lithium ion battery comprises a positive electrode sheet and an electrolyte, the positive electrode sheet comprising a positive electrode current collector and an active substance layer arranged on the positive electrode current collector, and the density of the electrolyte, the concentration of a lithium salt in the electrolyte and the surface density of the active substance layer arranged on the positive electrode current collector meeting a specific relational expression. While the performance of the lithium ion battery is ensured, the concentration of the lithium salt in the electrolyte is reduced, thus effectively reducing the cost of battery cells; in addition, a reduction in the concentration of the lithium salt results in a decrease in the viscosity of the electrolyte, which improves the wettability of the electrolyte, helping to allow a small quantity of the injected electrolyte meeting the relational expression in the same electrolyte injection volume in a battery cell dimension, and thus reducing the cost of batteries.

EP 4 465 401 A1

**Description**

**CROSS REFERENCE TO RELATED APPLICATIONS**

The present application claims priority to the Chinese Patent Application No. 202210899531.3, entitled "LITHIUM ION BATTERY", and filed to the China National Intellectual Property Administration on July 28, 2022, the entire content of which is incorporated herein by reference.

**TECHNICAL FIELD**

The present application relates to the technical field of lithium-ion battery preparation, and specifically relates to a lithium-ion battery.

**BACKGROUND**

With the global energy transformation and upgrading and the continuous increase in carbon emission requirements, the popularity and development prospects of the new energy vehicle industry continue to rise. The booming development of electric vehicles is also continuously driving the rapid growth in demand for power lithium batteries. At the same time, the requirements for battery range and cost are also getting higher and higher. Currently, the main development direction of lithium-ion batteries is high energy, high safety and low cost. Among them, the cost issue has always been the focus of consumers' attention. The reduction in battery costs will promote the rapid promotion and application of electric vehicles that rely on lithium-ion technology. However, due to the skyrocketing prices of lithium battery raw materials, downstream costs have increased significantly. As a result, battery costs have risen sharply, so battery costs have continued to rise, and cost control has become one of the issues that battery industry focuses on.

Electrolyte is one of the four key materials of lithium batteries. It is the carrier of ion transmission in the battery and plays a role in conducting lithium ions between the positive and negative electrodes. It has an important impact on the energy density, specific capacity, operating temperature range, cycle life, and safety performance of lithium batteries. In power batteries, the electrolyte accounts for about 10% to 15% of the total cost. The electrolyte mainly comprises lithium salt, solvent and additives. Generally speaking, in the total cost of the electrolyte, lithium salt accounts for about 50%, organic solvent accounts for about 25%, and additives account for about 25%. Therefore, reducing the concentration of lithium salts in the electrolyte, reducing the amount of lithium salts used, while improving the energy density of the battery cell and taking into account the electrochemical performance of the battery cell has become one of the research hotspots and difficulties.

**SUMMARY OF THE INVENTION**

Therefore, the technical problem to be solved by the present application is to overcome the defects of the prior art that it is difficult to reduce the cost of lithium-ion batteries while ensuring the performance of the lithium-ion batteries, thereby providing a lithium-ion battery.

To this end, the present application provides the following technical solutions.

The present application provides a lithium-ion battery, comprising a positive electrode plate and an electrolyte, wherein the positive electrode plate comprises a positive electrode current collector and an active material layer disposed on the positive electrode current collector, wherein the density of the electrolyte, the concentration of lithium salt in the electrolyte and the surface density of the active material layer disposed on the positive electrode current collector satisfy the following relationship:

$$0 < \frac{c \bullet \rho}{A_\rho} \leq 0.05$$

wherein $\rho$ is the value of electrolyte density, in g/ml;
c is the value of lithium salt concentration in the electrolyte, in mol/L;
$A_\rho$ is the value of the density of the active material layer disposed on the positive electrode current collector, in mg/cm$^2$;
the concentration of lithium salt in the electrolyte does not exceed 0.8 mol/L.

The electrolyte further comprises a first solvent;
optionally, a density of the first solvent is not higher than 1.0g/ml.

The first solvent comprises at least one of a carboxylate solvent and an ether solvent.

Optionally, the carboxylate solvent comprises at least one of methyl acetate, ethyl acetate, methyl propionate, ethyl propionate, ethyl butyrate, n-butyl acetate, isobutyl acetate and propyl propionate.

Optionally, the ether solvent comprises at least one of ethylene glycol dimethyl ether, diglyme, tetrahydrofuran, 2-methyltetrahydrofuran, methyl tert-butyl ether and 18-crown ether-6.

The density of the electrolyte does not exceed 1.2g/ml.

Optionally, a surface density of the active material layer on the positive electrode current collector is not less than 18 mg/cm$^2$.

The electrolyte further comprises a second solvent.

Optionally, a ratio of the total mass of the first solvent and the second solvent to the mass of the lithium salt in the electrolyte is not less than 7.

A density of the second solvent is not higher than 1.6g/ml.

Optionally, the second solvent comprises at least one of a linear carbonate solvent and a cyclic carbonate solvent.

Optionally, the linear carbonate comprises at least one of ethyl methyl carbonate, dimethyl carbonate, diethyl carbonate, dibutyl carbonate, diamyl carbonate, propyl carbonate, chloromethyl isopropyl carbonate, 1-chloroethyl isopropyl carbonate, di-tert-butyl dicarbonate, diphenyl carbonate, dimethyl pyrocarbonate, tetraethyl orthocarbonate, diethyl pyrocarbonate, methyl pentafluorophenyl carbonate, bis(2,2,2-trifluoroethyl) carbonate, methyl trifluoroethyl carbonate, fluoroethyl methyl carbonate, fluorinated dimethyl carbonate, fluorodiethyl carbonate, ethyl fluoroacetate, bis(pentafluorophenyl) carbonate, difluoroethylene carbonate and trifluoropropylene carbonate.

Optionally, the cyclic carbonate comprises at least one of ethylene carbonate, vinylene carbonate, propylene carbonate, vinyl ethylene carbonate, divinyl ethylene carbonate, methylene ethylene carbonate, trimethylene carbonate, tert-butylphenyl carbonate, bis(4-nitrobenzene) carbonate, catechol carbonate, fluoroethylene carbonate, fluoropropylene carbonate, difluoroethylene carbonate and trifluoropropylene carbonate.

The lithium salt comprises a first lithium salt and a second lithium salt.

Optionally, the first lithium salt is selected from at least one of lithium hexafluorophosphate, lithium bis(fluorosulfon)imide, and lithium bis(trifluoromethanesulphonyl)imide.

Optionally, the second lithium salt is selected from at least one of lithium tetrafluoroborate, lithium difluorooxalatoborate, lithium difluorophosphate, lithium hexafluoroarsenate, lithium dioxalatoborate, lithium nitrate and 4,5-dicyano-2-(trifluoromethyl) isopyrazole.

Optionally, the molar ratio of the first lithium salt to the second lithium salt is not less than 1;

Optionally, the lithium salt comprises lithium hexafluorophosphate, lithium bis(fluorosulfonyl)imide, and lithium bis(oxalatoborate) and lithium difluorophosphate in a molar ratio of (2.5-3.2):(4.3-5.5):(0.8-1.2):(0.8-1.3).

Optionally, the lithium salt comprises lithium hexafluorophosphate, lithium bis(fluorosulfonyl)imide, lithium dioxaloborate and lithium difluorophosphate in a molar ratio of 3:5:1:1.

The electrolyte further comprises a functional additive.

Optionally, the functional additive comprises at least one of vinylene carbonate, ethylene carbonate, propylene carbonate, tris(trimethylsilyl)phosphite, fluoroethylene carbonate, lithium difluorophosphate, vinyl sulfate, methylene disulfonate, lithium 4,5-dicyano-2-(trifluoromethyl)isopyrazole, triallyl phosphate, 1,3-propanesultone, succinonitrile, dimethyl sulfonylmethane, trifluoromethylphenyl sulfide, lithium bis(fluorosulfonyl)imide, lithium tetrafluoroborate, lithium difluoroborate and lithium dioxaloborate.

The proportion of the mass of the functional additive in the electrolyte does not exceed 5%.

The structure of active material in the positive electrode active material layer has an olivine structure and a phosphate polyanion group.

The positive active material is lithium iron phosphate $LiFePO_4$ and/or $LiFe_{1-x}M_xPO_4$, wherein $0<x\leq1$, M=one or more combinations of Mn, Ni, Co, Ti, Mg, Al, V, Cr, Ge, Sr, Y, Zr, Mo, Sn and W.

The lithium-ion battery satisfies at least one of (1)-(2),

(1) the lithium-ion battery also comprises a negative electrode plate;

optionally, a thickness of the negative electrode plate does not exceed 200 $\mu$m;
optionally, the negative electrode plate is lithium; or,
the negative electrode plate is lithium alloy; or,
the negative electrode plate comprises a negative electrode current collector and a negative electrode active material layer disposed on the negative electrode current collector;
optionally, the negative active material layer comprises a negative active material, a conductive agent and a binder; wherein the negative active layer can be coated on one or both sides of the current collector.

(2) the lithium-ion battery also comprises a separator;

optionally, the separator is at least one of a polyethylene separator, a polypropylene separator, a composite ceramic separator, a cellulose separator, a polyester separator, a polyimide separator, a polyamide separator, a spandex separator, an aramid separator, a non-woven fabric separator, a porous polymer separator and an inorganic composite separator.

The technical solution of the present application has the following advantages:

1. The lithium-ion battery provided by the present application makes the density of the electrolyte in the lithium-ion battery, the concentration of lithium salt in the electrolyte and the surface density of the active material layer disposed on the positive electrode current collector satisfy a certain relationship; the present application adjusts the concentration of lithium salt in the electrolyte, the surface density of the active material layer, and the density of the electrolyte to satisfy specific requirements, thereby reducing the concentration of lithium salt in the electrolyte while ensuring the performance of the lithium-ion battery, and effectively reducing the cost of the battery cell. At the same time, the reduction in lithium salt concentration reduces the viscosity of the electrolyte, improves the wettability of the electrolyte, which is conducive to the low injection quality of the electrolyte that satisfies this relationship under the same injection volume, reducing the cost of the battery. Further, the electrolyte provided by the present application can also enable lithium-ion batteries to achieve better energy density. The lithium-ion battery provided by the present application meets conventional charge and discharge and rate performance requirements on the basis of reducing the amount of electrolyte injection and battery cost, and at the same time, the electrolyte conductivity is relatively suitable. Furthermore, the present application can not only reduce the concentration of lithium salt in the electrolyte, reduce the cost of the electrolyte, but also optimize the performance of the battery, such as charge-discharge and rate cycling by making the concentration of lithium salt in the electrolyte, the density of the electrolyte, and the surface density of the active material layer satisfy a specific relationship.

2. For the lithium-ion battery provided by the present application, adding a first solvent with a density not higher than 1.0g/ml to the electrolyte can make the electrolyte have a lower density, reduce the quality of liquid injection, and ensure that the lithium-ion battery has higher energy density.

3. The lithium-ion battery provided by the present application adopts a variety of lithium salt composite methods, especially the lithium salt comprises lithium hexafluorophosphate, lithium bis(fluorosulfonyl)imide, lithium dioxalaborate and lithium difluorophosphate in a molar ratio of 3:5:1:1. Composite lithium salt helps form the SEI separator, optimizes the SEI separator structure, improves the electrical performance of the battery cell, and meets the battery's charge-discharge and rate requirements.

## DETAILED DESCRIPTION

The following examples are provided for a better understanding of the present application, are not limited to the best implementations, and do not constitute a limitation on the content or scope of protection of the present application. Any product identical or similar to the present application, derived by anyone under the inspiration of the present application or by combining the present application with other features of the prior art, falls within the scope of protection of the present application.

Where specific experimental steps or conditions are not indicated in the examples, the operations or conditions of conventional experimental steps described in the documents in the present art can be followed. The reagents or instruments used without the manufacturer indicated are conventional reagent products that are commercially available.

### Example 1

This example provides a 5Ah lithium-ion battery, comprising an electrolyte, a positive electrode plate, a negative electrode plate and a separator.

The electrolyte comprises 8.96g of a first solvent, 5.97g of a second solvent, 1.71g of a lithium salt and 0.36g of a functional additive. The density of the electrolyte at 22.6°C is 1.1693g/mL; wherein the first solvent comprises ethyl propionate and propyl propionate in a mass ratio of 2:4, the second solvent comprises ethylene carbonate (EC) and ethyl methyl carbonate (EMC) in a mass ratio of 3:1, and the mass ratio of the first solvent to the second solvent is 3:2; the ratio of the total mass of the first solvent and the second solvent to the mass of the lithium salt is 8.7; the lithium salt comprises lithium hexafluorophosphate, lithium bis(fluorosulfon)imide, lithium dioxalatoborate, and lithium difluorophosphate, the concentrations of which are 0.21mol/L, 0.35mol/L, 0.07mol/L and 0.07mol/L in the electrolyte, respectively; the functional additive is vinylene carbonate (VC), and the mass fraction of the functional additive in the electrolyte is 2.12%.

The positive electrode plate comprises a positive electrode current collector and an active material layer disposed on the positive electrode current collector. The positive electrode active material is $LiFePO_4$. The positive electrode active material layer comprises $LiFePO_4$, conductive agent carbon black and bonding agent PVDF in a mass ratio of 97:1.6:1.4. The surface density of the positive active material layer is 22mg/cm$^2$, and the compaction density is 2.60g/cm$^3$.

The negative electrode plate comprises a negative electrode current collector and a negative electrode active material layer disposed on the negative electrode current collector. The negative electrode active material layer comprises artificial graphite, conductive agent carbon black and binder CMC in a mass ratio of 95.7:1:3.3. The negative electrode active material layer is coated on one side of the current collector, and the thickness of the negative electrode plate is 65 $\mu$m after rolling.

The separator is a ceramic separator, comprising a PE separator base and an alumina coating coated on the separator base. The thickness of the alumina coating is 2 $\mu$m.

The ratio of $\dfrac{c \bullet \rho}{A_\rho}$ in this example is 0.037.

**Example 2**

This example provides a 5Ah lithium-ion battery, comprising an electrolyte, a positive electrode plate, a negative electrode plate and a separator;

The electrolyte comprises 9.01g of a first solvent, 6.02g of a second solvent, 1.48g of a lithium salt and 0.358g of a functional additive. The density of the electrolyte at 22.6°C is 1.1606g/mL; wherein the first solvent comprises ethyl propionate and propyl propionate in a mass ratio of 2:4, the second solvent comprises ethylene carbonate (EC) and ethyl methyl carbonate (EMC) in a mass ratio of 3:1, and the mass ratio of the first solvent and the second solvent is 3:2; the ratio of the total mass of the first solvent and the second solvent to the mass of the lithium salt is 10.2; the lithium salt comprises lithium hexafluorophosphate, lithium bis(fluorosulfon)imide, lithium dioxalatoborate, and lithium difluorophosphate, the concentrations of which are 0.18mol/L, 0.3mol/L, 0.06mol/L and 0.06mol/L in the electrolyte, respectively; the functional additive is vinylene carbonate (VC), and the mass fraction of the functional additive in the electrolyte is 2.12%.

The positive electrode plate comprises a positive electrode current collector and an active material layer disposed on the positive electrode current collector. The positive electrode active material is LiFePO$_4$. The positive electrode active material layer comprises LiFePO$_4$, conductive agent carbon black and bonding agent PVDF in a mass ratio of 97:1.6:1.4. The surface density of the positive active material layer is 22mg/cm$^2$, and the compaction density is 2.60g/cm$^3$.

The negative electrode plate comprises a negative electrode current collector and a negative electrode active material layer disposed on the negative electrode current collector. The negative electrode active material layer comprises artificial graphite, conductive agent carbon black and binder CMC in a mass ratio of 95.7:1:3.3. The negative electrode active material layer is coated on one side of the current collector, and the thickness of the negative electrode plate is 65 $\mu$m after rolling.

The separator is a ceramic separator, comprising a PE separator base and an alumina coating coated on the separator base. The thickness of the alumina coating is 2 $\mu$m.

The ratio of $\dfrac{c \bullet \rho}{A_\rho}$ in this example is 0.032.

**Example 3**

This example provides a 5Ah lithium-ion battery, comprising an electrolyte, a positive electrode plate, a negative electrode plate, and a separator;

The electrolyte comprises 9.10g of a first solvent, 6.07g of a second solvent, 1.22g of a lithium salt and 0.355g of a functional additive. The density of the electrolyte at 22.6°C is 1.1528g/mL; wherein the first solvent comprises ethyl propionate and propyl propionate in a mass ratio of 2:4, the second solvent comprises ethylene carbonate (EC) and ethyl methyl carbonate (EMC) in a mass ratio of 3:1, and the mass ratio of the first solvent and the second solvent is 3:2; the ratio of the total mass of the first solvent and the second solvent to the mass of the lithium salt is 12.4; the lithium salt comprises lithium hexafluorophosphate, lithium bis(fluorosulfon)imide, lithium dioxalatoborate, and lithium difluorophosphate, the concentrations of which are 0.15mol/L, 0.25mol/L, 0.05mol/L, and 0.05mol/L in the electrolyte, respectively; the functional additive is vinylene carbonate (VC), and the mass fraction of the functional additive in the electrolyte is 2.12%.

The positive electrode plate comprises a positive electrode current collector and an active material layer disposed on the positive electrode current collector. The positive electrode active material is LiFePO$_4$. The positive electrode active material layer comprises LiFePO$_4$, conductive agent carbon black and bonding agent PVDF in a mass ratio of 97:1.6:1.4. The surface density of the positive active material layer is 22mg/cm$^2$, and the compaction density is 2.60g/cm$^3$.

The negative electrode plate comprises a negative electrode current collector and a negative electrode active material layer disposed on the negative electrode current collector. The negative electrode active material layer comprises artificial graphite, conductive agent carbon black and binder CMC in a mass ratio of 95.7:1:3.3. The negative electrode active material layer is coated on one side of the current collector, and the thickness of the negative electrode plate is 65 μm after rolling.

The separator is a ceramic separator, comprising a PE separator base and an alumina coating coated on the separator base. The thickness of the alumina coating is 2 μm.

The ratio of $\dfrac{c \bullet \rho}{A_\mathrm{p}}$ in this example is 0.026.

**Comparative Example 1**

This example provides a 5Ah lithium-ion battery, comprising an electrolyte, a positive electrode plate, a negative electrode plate, and a separator.

The electrolyte comprises 9.186g of a first solvent, 6.12g of a second solvent, 2.21g of a lithium salt and 0.38g of a functional additive. The density of the electrolyte at 22.6°C is 1.2315g/mL; wherein the first solvent comprises ethyl propionate and propyl propionate in a mass ratio of 2:4, the second solvent comprises ethylene carbonate (EC) and ethyl methyl carbonate (EMC) in a mass ratio of 3:1, and the mass ratio of the first solvent and the second solvent is 3:2; the ratio of the total mass of the first solvent and the second solvent to the mass of the lithium salt is 6.93; the lithium salt comprises lithium hexafluorophosphate, the concentration of which is 1mol/L in the electrolyte; the functional additive is vinylene carbonate (VC), and the mass fraction of the functional additive in the electrolyte is 2.12%. The positive electrode plate comprises a positive electrode current collector and an active material layer disposed on the positive electrode current collector. The positive electrode active material is LiFePO$_4$. The positive electrode active material layer comprises LiFePO$_4$, conductive agent carbon black and bonding agent PVDF in a mass ratio of 97:1.6:1.4. The surface density of the positive active material layer is 22mg/cm$^2$, and the compaction density is 2.60g/cm$^3$.

The negative electrode plate comprises a negative electrode current collector and a negative electrode active material layer disposed on the negative electrode current collector. The negative electrode active material layer comprises artificial graphite, conductive agent carbon black and binder CMC in a mass ratio of 95.7:1:3.3. The negative electrode active material layer is coated on one side of the current collector, and the thickness of the negative electrode plate is 65 μm after rolling.

The separator is a ceramic separator, comprising a PE separator base and an alumina coating coated on the separator base. The thickness of the alumina coating is 2 μm.

The ratio of $\dfrac{c \bullet \rho}{A_\mathrm{p}}$ in this example is 0.056.

**Test Example**

This test example provides the performance test results of the lithium-ion batteries and electrolytes of each example and comparative example, as follows:

Test method for battery cycle performance under normal temperature conditions and high temperature conditions: each battery is cycled 1,000 times, and the battery capacity retention rate before and after cycles is calculated. The normal temperature test conditions are: 1.0C rate discharge, 1.0C rate charge, voltage range 2.5V to 3.65V, temperature 25±5°C. High temperature test conditions are: 1.0C rate discharge, 1.0C rate charge, voltage range 2.5 V to 3.65V, temperature 45 ±5°C.

Test method for battery high-temperature storage performance: 1C constant current and constant voltage is fully charged, and the battery core is stored in an environment of 60±5°C for 30 days. The battery capacity retention rate before and after storage are calculated.

The above test results are shown in Table 1.

EP 4 465 401 A1

Table 1 Test results of each Example and Comparative example

| Example | Battery energy density Wh/Kg | Capacity retention rate for 1000 cycles at room temperature | Capacity retention rate for 1000 cycles at high temperature | Capacity retention rate after 60 °C/30 day storage |
|---|---|---|---|---|
| Example 1 | 167.5 | 98.8% | 86.8% | 95.8% |
| Example 2 | 167.8 | 95.1% | 88.1% | 97.1% |
| Example 3 | 168 | 95.3% | 89.3% | 98.7% |
| Comparative example 1 | 166 | 90.4% | 81.7% | 90.6% |

When the lithium salt concentration in the electrolyte of Comparative Example 1 is 1 mol/L, compared with the cost of the electrolyte of Example 1 with the lithium salt concentration of 0.7 mol/L, the cost of the electrolyte of Comparative Example 1 is about 20% higher than that of Example 1. The battery prepared by the present application significantly reduces the cost while ensuring battery performance.

Furthermore, compared with the battery prepared in Comparative Example 1, the battery prepared in the present application has better cycle performance and higher energy density, meets the requirements of conventional charge and discharge and rate performance, and the conductivity of the electrolyte also meets the requirements for use, the concentration of lithium salt in the electrolyte is lower, and the cost is also lower.

Obviously, the above examples are merely examples made for clear description, rather limiting the implementations. For those of ordinary skill in the art, other different forms of variations or modifications can also be made on the basis of the above-mentioned description. All embodiments are not necessary to be and cannot be exhaustively listed herein. In addition, obvious variations or modifications derived therefrom all fall within the scope of protection of the present invention.

## Claims

1. A lithium-ion battery, comprising a positive electrode plate and an electrolyte, wherein the positive electrode plate comprises a positive electrode current collector and an active material layer disposed on the positive electrode current collector, wherein the density of the electrolyte, the concentration of lithium salt in the electrolyte and the surface density of the active material layer disposed on the positive electrode current collector satisfy the following relationship:

$$0 < \frac{c \bullet \rho}{A_\rho} \leq 0.05$$

wherein $\rho$ is the value of electrolyte density, in g/ml;
c is the value of lithium salt concentration in the electrolyte, in mol/L;
$A_\rho$ is the value of the density of the active material layer disposed on the positive electrode current collector, in mg/cm$^2$;
the concentration of lithium salt in the electrolyte does not exceed 0.8 mol/L.

2. The lithium-ion battery according to claim 1, wherein the electrolyte further comprises a first solvent;
optionally, a density of the first solvent is not higher than 1.0g/ml.

3. The lithium-ion battery according to claim 2, wherein the first solvent comprises at least one of a carboxylate solvent and an ether solvent;

optionally, the carboxylate solvent comprises at least one of methyl acetate, ethyl acetate, methyl propionate, ethyl propionate, ethyl butyrate, n-butyl acetate, isobutyl acetate and propyl propionate;
optionally, the ether solvent comprises at least one of ethylene glycol dimethyl ether, diglyme, tetrahydrofuran, 2-methyltetrahydrofuran, methyl tert-butyl ether and 18-crown ether-6.

4. The lithium-ion battery according to any one of claims 1 to 3, wherein a density of the electrolyte does not exceed 1.2g/ml;
optionally, a surface density of the active material layer on the positive electrode current collector is not less than 18 mg/cm$^2$.

5. The lithium-ion battery according to any one of claims 1 to 4, wherein the electrolyte further comprises a second solvent;
optionally, a ratio of the total mass of the first solvent and the second solvent to the mass of the lithium salt in the electrolyte is not less than 7.

6. The lithium-ion battery according to claim 5, wherein a density of the second solvent is not higher than 1.6g/ml;

optionally, the second solvent comprises at least one of a linear carbonate solvent and a cyclic carbonate solvent;
optionally, the linear carbonate comprises at least one of ethyl methyl carbonate, dimethyl carbonate, diethyl carbonate, dibutyl carbonate, diamyl carbonate, propyl carbonate, chloromethyl isopropyl carbonate, 1-chloroethyl isopropyl carbonate, di-tert-butyl dicarbonate, diphenyl carbonate, dimethyl pyrocarbonate, tetraethyl orthocarbonate, diethyl pyrocarbonate, methyl pentafluorophenyl carbonate, bis(2,2,2-trifluoroethyl) carbonate, methyl trifluoroethyl carbonate, fluoroethyl methyl carbonate, fluorinated dimethyl carbonate,, fluorodiethyl carbonate, ethyl fluoroacetate, bis(pentafluorophenyl) carbonate, difluoroethylene carbonate and trifluoropropylene carbonate;
optionally, the cyclic carbonate comprises at least one of ethylene carbonate, vinylene carbonate, propylene carbonate, vinyl ethylene carbonate, divinyl ethylene carbonate, methylene ethylene carbonate, trimethylene carbonate, tert-butylphenyl carbonate, bis(4-nitrobenzene) carbonate, catechol carbonate, fluoroethylene carbonate, fluoropropylene carbonate, difluoroethylene carbonate and trifluoropropylene carbonate.

7. The lithium-ion battery according to any one of claims 1-6, wherein the lithium salt comprises a first lithium salt and a second lithium salt;

optionally, the first lithium salt is selected from at least one of lithium hexafluorophosphate, lithium bis(fluorosulfon)imide, and lithium bis(trifluoromethanesulphonyl)imide;
optionally, the second lithium salt is selected from at least one of lithium tetrafluoroborate, lithium difluorooxalatoborate, lithium difluorophosphate, lithium hexafluoroarsenate, lithium dioxalatoborate, lithium nitrate and 4,5-dicyano-2-(trifluoromethyl) isopyrazole;
optionally, the molar ratio of the first lithium salt to the second lithium salt is not less than 1;
optionally, the lithium salt comprises lithium hexafluorophosphate, lithium bis(fluorosulfonyl)imide, and lithium bis(oxalatoborate) and lithium difluorophosphate in a molar ratio of (2.5-3.2):(4.3-5.5):(0.8-1.2):(0.8-1.3);
optionally, the lithium salt comprises lithium hexafluorophosphate, lithium bis(fluorosulfonyl)imide, lithium dioxaloborate and lithium difluorophosphate in a molar ratio of 3:5: 1: 1.

8. The lithium-ion battery according to any one of claims 1-7, wherein the electrolyte further comprises a functional additive;
optionally, the functional additive comprises at least one of vinylene carbonate, ethylene carbonate, propylene carbonate, tris(trimethylsilyl)phosphite, fluoroethylene carbonate, lithium difluorophosphate, vinyl sulfate, methylene disulfonate, lithium 4,5-dicyano-2-(trifluoromethyl)isopyrazole, triallyl phosphate, 1,3-propanesultone, succinonitrile, dimethyl sulfonylmethane, trifluoromethylphenyl sulfide, lithium bis(fluorosulfonyl)imide, lithium tetrafluoroborate, lithium difluoroborate and lithium dioxaloborate.

9. The lithium-ion battery according to any one of claims 1 to 8, wherein the structure active material in the positive electrode active material layer has an olivine structure and a phosphate polyanion group.

10. The lithium-ion battery according to any one of claims 1-9, wherein at least one of (1)-(2) is satisfied,

(1) the lithium-ion battery also comprises a negative electrode plate;
optionally, a thickness of the negative electrode plate does not exceed 200 $\mu$m;
(2) the lithium-ion battery also comprises a separator;

optionally, the separator is at least one of a polyethylene separator, a polypropylene separator, a composite ceramic separator, a cellulose separator, a polyester separator, a polyimide separator, a polyamide separator, a spandex separator, an aramid separator, a non-woven fabric separator, a porous polymer separator and an inorganic

composite separator.

## INTERNATIONAL SEARCH REPORT

International application No.

**PCT/CN2023/109600**

### A.    CLASSIFICATION OF SUBJECT MATTER

H01M 10/0525(2010.01)i;  H01M 4/13(2010.01)i;  H01M 10/0566(2010.01)i;  H01M 10/0568(2010.01)i;  H01M 10/0569(2010.01)i;  H01M 10/058(2010.01)i;  H01M 4/58(2010.01)i;  H01M 10/42(2006.01)i

According to International Patent Classification (IPC) or to both national classification and IPC

### B.    FIELDS SEARCHED

Minimum documentation searched (classification system followed by classification symbols)

IPC:  H01M 10/-, H01M 4/-

Documentation searched other than minimum documentation to the extent that such documents are included in the fields searched

Electronic data base consulted during the international search (name of data base and, where practicable, search terms used)

CNABS, CNTXT, VCN, VEN, WPABS, DWPI, ENTXT, CNKI, ISI: 电池, 锂盐浓度, 锂盐的浓度, 锂盐摩尔浓度, 锂盐的摩尔浓度, 锂盐摩尔的浓度, 电解液密度, 电解液的密度, 正极, 集流体, 面密度, battery, lithium salt, concentration, molarity, molar, electrolyte, density, positive, electrode, current, collector, areal, surface

### C.    DOCUMENTS CONSIDERED TO BE RELEVANT

| Category* | Citation of document, with indication, where appropriate, of the relevant passages | Relevant to claim No. |
|---|---|---|
| PX | CN 115064762 A (SVOLT ENERGY TECHNOLOGY CO., LTD.) 16 September 2022 (2022-09-16)<br>claims | 1-10 |
| A | CN 114221035 A (SHANGHAI RUPU GREEN INNOVATIVE ENERGY CO., LTD.) 22 March 2022 (2022-03-22)<br>entire document | 1-10 |
| A | CN 102394311 A (DONGGUAN AMPEREX TECHNOLOGY LIMITED et al.) 28 March 2012 (2012-03-28)<br>entire document | 1-10 |
| A | CN 108878956 A (NINGDE CONTEMPORARY AMPEREX TECHNOLOGY CO., LTD.) 23 November 2018 (2018-11-23)<br>entire document | 1-10 |
| A | CN 113299974 A (ZHUHAI COSMX BATTERY CO., LTD.) 24 August 2021 (2021-08-24)<br>entire document | 1-10 |

☑ Further documents are listed in the continuation of Box C.        ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **23 October 2023** | **27 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/109600** |

**C.** **DOCUMENTS CONSIDERED TO BE RELEVANT**

| Category* | Citation of document, with indication, where appropriate, of the relevant passages | Relevant to claim No. |
| --- | --- | --- |
| A | CN 114464891 A (INSTITUTE OF PHYSICS, CHINESE ACADEMY OF SCIENCES) 10 May 2022 (2022-05-10) entire document | 1-10 |
| A | WO 2022032624 A1 (CONTEMPORARY AMPEREX TECHNOLOGY CO., LTD.) 17 February 2022 (2022-02-17) entire document | 1-10 |

Form PCT/ISA/210 (second sheet) (July 2022)

INTERNATIONAL SEARCH REPORT
Information on patent family members

International application No.

**PCT/CN2023/109600**

| Patent document cited in search report | | | Publication date (day/month/year) | Patent family member(s) | | | Publication date (day/month/year) |
|---|---|---|---|---|---|---|---|
| CN | 115064762 | A | 16 September 2022 | None | | | |
| CN | 114221035 | A | 22 March 2022 | None | | | |
| CN | 102394311 | A | 28 March 2012 | None | | | |
| CN | 108878956 | A | 23 November 2018 | US | 2020014061 | A1 | 09 January 2020 |
| | | | | US | 11031622 | B2 | 08 June 2021 |
| | | | | EP | 3591747 | A1 | 08 January 2020 |
| CN | 113299974 | A | 24 August 2021 | None | | | |
| CN | 114464891 | A | 10 May 2022 | None | | | |
| WO | 2022032624 | A1 | 17 February 2022 | US | 2023075325 | A1 | 09 March 2023 |
| | | | | EP | 4120408 | A1 | 18 January 2023 |
| | | | | EP | 4120408 | A4 | 07 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210899531